# EUROPEAN PATENT APPLICATION

(11) **EP 4 642 065 A1**
(43) Date of publication of application: **29.10.2025**
(21) Application number: 24305638.9
(22) Date of filing: 25.04.2024
(51) Int. Cl.: H04W 8/18

(54) **A METHOD FOR SWITCHING A TERMINAL SUPPORTING MEP (MULTI - ENABLED - PROFILES) BETWEEN A PUBLIC NETWORK AND A PRIVATE NETWORK, AND CORRESPONDING EUICC**

(71) Applicant: THALES DIS FRANCE SAS, 92190 Meudon (FR)
(72) Inventor: DEMARTY, Joel, 35520 MONTREUIL LE GAST (FR); VOYER, Jérome, 13390 AURIOL (FR)
(74) Representative: Scheer, Luc

(57) **Abstract**

The invention proposes a method for switching a terminal 10 supporting MEP Multi-Enabled Profiles between a public network and a private network, the terminal 10 having two paired profiles in a MEP enabled eUICC 13, a first profile 17 being attached to a first modem 15 and a second profile 18 being attached to a second modem 16, the first modem 15 being active and the second modem 16 being in standby mode, the second profile 18 being a non-public network NPN profile, the first profile 17 comprising a first applet 21, called Private Network Main Applet, the second profile 18 comprising a second applet 22, called Private Network Secondary/Monitoring Applet, the method comprising:
- As soon as the second modem 16 loses coverage with a NPN, sending from the Private Network Secondary/Monitoring Applet 22 to the Private Network Main Applet 21, through an interface 20 between the applets 21, 22, a message indicating that the NPN is no longer available, in order to connect the terminal 10 through the first modem 15 to a public network;
- As soon as the second modem 16 regains coverage with the NPN, sending from the Private Network Secondary/Monitoring Applet 22 to the Private Network Main Applet 21, through the interface 20, a message indicating that the NPN is available, in order to connect the terminal 10 through the first modem 15 to the NPN.

## Description

The invention concerns telecommunications, especially in 5G networks. More precisely, the invention concerns private networks and the switch of a terminal supporting MEP (Multi-Enabled Profiles) between a public and a private network (PLMN).

Private Networks is one of the key drivers of 5G but a private network's coverage is usually limited and a customer needs to roam to a public network while no more in coverage of a private network (factory, site, etc..). 3GPP does not provide a clean solution for this generic problem One known solution is to use an applet that is scanning, while connected to a public PLMN, for private network availability. But this can be done only once every 6 minutes (EF_HPPLMN=1). This solution has thus strong performance limitations, especially for critical use cases (e.g. military).

The present invention proposes to remove this limitation when the device/terminal supports MEP (Multiple-Enabled Profiles as defined in SGP.22 V3.0).

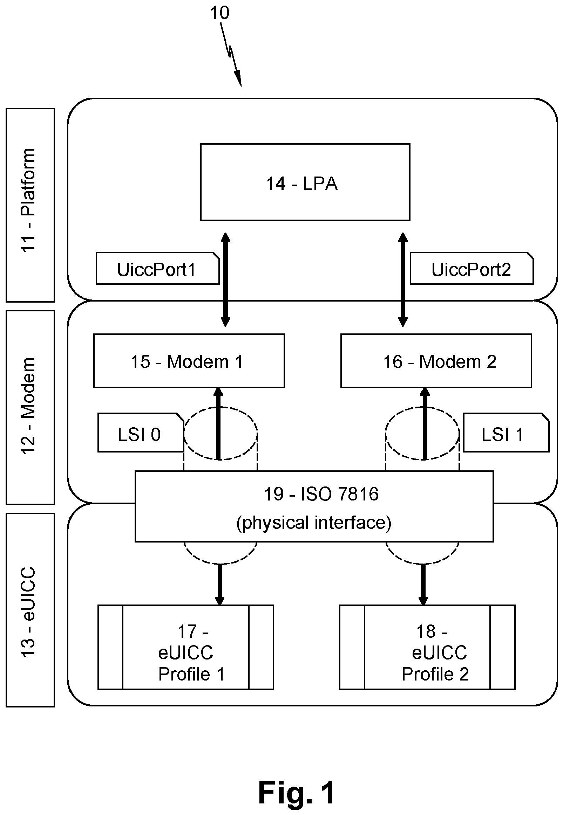

MEP's working as defined in SGP.22 V3.0 is represented in figure 1.

In this figure a telecommunication device 10 is represented. It is typically a smartphone or a PDA. The device 10 comprises an OS platform 11, a set of modems 12 and an eUICC 13 (embedded UICC).

The OS platform 11 comprises mainly a LPA communicating through two ports (UiccPort1 and UiccPort2) with virtual modems 15 and 16 comprised in the set of modems 12.

Each modem 15 and 16 communicates through a Logical Secure element Interfaces (LSI 0 and LSI 1) with a profile (eUlCC Profile 1 and eUlCC Profile 2, respectively referenced 17 and 18) comprised on the eUICC 13 through an ISO 7816 physical interface 19 (based on T=1 protocol). A LSI is a logical connection between an endpoint in the device 10 (here the virtual modems 15 and 16) and one logical secure element 17, 18.

The communication between the different elements is based on ETSI mechanisms (ETSI 102 221 R17.2.0 and ETSI 102 223 R17.1.0).

The Profiles 17 and 18 and the modems 15 and 16 support "Manage LSI" command mandatory options.

The invention proposes to improve this MEP mechanism as defined in the appended claims.

The invention will be better understood by reading the following description of a preferred embodiment of the invention, based on MEP, for connection the device 10 as soon as possible to an available private network.

In this respect:
- Figure 1 represents the state of the art;
- Figure 2 represents a preferred embodiment of the invention, based on MEP.

Figure 1 has been described previously in regard of the state of the art.

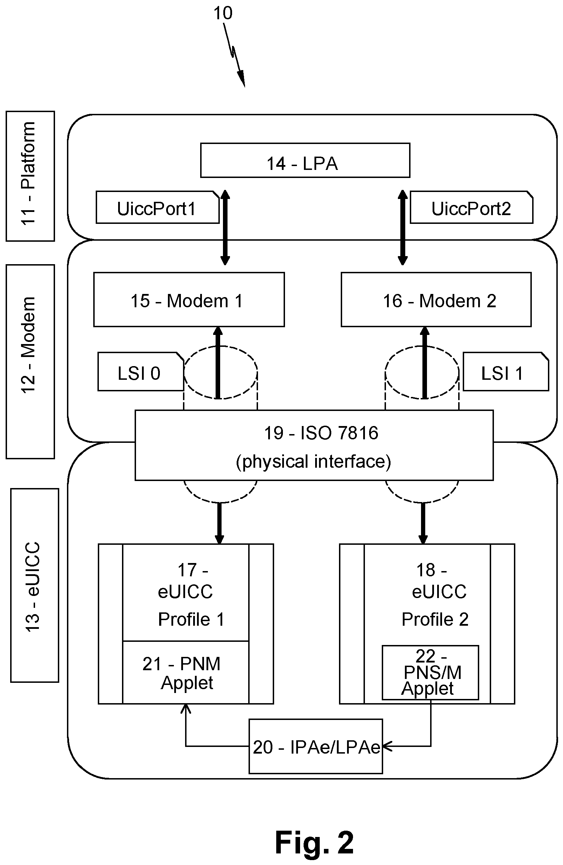

Figure 2 represents a preferred embodiment of the invention, based on MEP.

In this figure, the elements identical to those of figure 1 have the same references.

The invention proposes to improve the state of the art by adding an interface 20 between two applets 21 and 22, these applets being called respectively Private Network Main Applet (PNM Applet) et Private Network Secondary/Monitoring Applet (PNS/M Applet).

The profiles (Profile 1 for eUICC 17 and Profile 2 for eUICC 18) must be matched (paired) so that the PNS/M Applet 22 of the second profile can send messages (essentially but not limitatively "out of coverage" and "in service") to the PNM Applet 21 of the first profile.

Thus, the eUICC 13 contains two paired profiles, the first profile (Profile 1) being multi-IMSI (it has an IMSI for home or roaming public land mobile network (PLMN) and an IMSI for non-public network (NPN)) and attached to Modem 1 (15). The second profile (Profile 2) is NPN only and attached to Modem 2 (16).

The PNS/M applet 22 is embedded in the eUICC Profile 2.

The system works with the following steps:
- Modem 1 15 is always active, and Modem 2 16 is always in a standby mode.
- As soon as Modem 2 16 loses coverage with a NPN network, Profile 2 receives a Location Status Event with "no service". It means that it is no longer in coverage with his private network.
- The profile's 2 PNS/M then notifies Profile 1 PNM applet that its private network is no longer available.
- Profile 1 that is multi-IMSI then connects to a public network. Continuation of communication is therefore ensured.
- As soon as Modem 2 regains coverage, Profile 2 receives a Location Status Event with "normal service".
- The applet PNS/M 22 of Profile 2 then notifies PNM applet 21 that its private network is visible (the eUICC 18 can connect again to its private network).
- The PNM applet 21 then connects to the private network defined in the profile of Profile 2.
- The interaction between the two applets 21 and 22 can be through OS (private API) or through a SAM or through ISD-R thanks to LPAe/IPAe. LPAe/IPAe in ISD-R since it is better as it is about managing profiles, it can help pairing profiles together. Another possible solution is described in EP 24305109.1 filed on January 17 2024, which defines a virtual terminal security domain that can interact with the two profiles and host a proxy/bridge. Alternatively, It is also possible to use a proxy/bridge on the host platform.
- Modem 16 is always in monitoring mode (idle) and is not intended to establish a voice communication with the private or non-private network. It has the fonction (with the PNS/M applet) of detecting the presence and absence of the private network, in order to switch the virtual modem 15 to a private or public network.

The invention provides a solution for private networks when devices support MEP which will be the case on enterprise fleets used in private networks (they have often 2 SIMs).

The invention also applies to Dual SIM Dual Active (DSDA): Both SIMs (eUICC profiles) can be used in both idle and connected modes. Each SIM has a dedicated transceiver, meaning that there are no interdependencies on idle or connected mode operation at the modem level.

The invention also concerns an eUICC 13 configured for switching a terminal 10 supporting MEP Multi-Enabled Profiles between a public network and a private network, the eUICC 13 having two paired profiles, a first profile 17 attached to a first modem 15 and a second profile 18 attached to a second modem 16, the first modem 15 being active and the second modem 16 being in standby mode, the second profile 18 being a non-public network NPN profile, the first profile 17 comprising a first applet 21, called Private Network Main Applet, the second profile 18 comprising a second applet 22, called Private Network Secondary/Monitoring Applet, the eUICC being configured for:
- As soon as the second modem 16 loses coverage with a NPN, sending from the Private Network Secondary/Monitoring Applet 22 to the Private Network Main Applet 21, through an interface 20 between the applets 21, 22, a message indicating that the NPN is no longer available, in order to connect the terminal 10 through the first modem 15 to a public network;
- As soon as the second modem 16 regains coverage with the NPN, sending from the Private Network Secondary/Monitoring Applet 22 to the Private Network Main Applet 21, through the interface 20, a message indicating that the NPN is available, in order to connect the terminal 10 through the first modem 15 to the NPN.

## Claims

1. A method for switching a terminal (10) supporting MEP (Multi-Enabled Profiles) between a public network and a private network, said terminal (10) having two paired profiles in a MEP enabled eUICC (13), a first profile (17) being attached to a first modem (15) and a second profile (18) being attached to a second modem (16), said first modem (15) being active and said second modem (16) being in standby mode, said second profile (18) being a non-public network (NPN) profile, said first profile (17) comprising a first applet (21), called Private Network Main Applet, said second profile (18) comprising a second applet (22), called Private Network Secondary/Monitoring Applet, said method comprising:
- As soon as said second modem (16) loses coverage with a NPN, sending from said Private Network Secondary/Monitoring Applet (22) to said Private Network Main Applet (21), through an interface (20) between said applets (21, 22), a message indicating that said NPN is no longer available, in order to connect said terminal (10) through said first modem (15) to a public network;
- As soon as said second modem (16) regains coverage with said NPN, sending from said Private Network Secondary/Monitoring Applet (22) to said Private Network Main Applet (21), through said interface (20), a message indicating that said NPN is available, in order to connect said terminal (10) through said first modem (15) to said NPN.

2. Method according to claim 1, wherein said interface (20) is one among:
- the OS of said terminal (10) through private APIs
- a TSD (Trusted Security Domain)
- a SAM (Secure Application for Mobile)
- and ISD-R thanks to a LPAe/IPAe.
- a proxy/bridge on the host platform

3. An eUICC (13) configured for switching a terminal (10) supporting MEP (Multi-Enabled Profiles) between a public network and a private network, said eUICC (13) having two paired profiles, a first profile (17) attached to a first modem (15) and a second profile (18) attached to a second modem (16), said first modem (15) being active and said second modem (16) being in standby mode, said second profile (18) being a non-public network (NPN) profile, said first profile (17) comprising a first applet (21), called Private Network Main Applet, said second profile (18) comprising a second applet (22), called Private Network Secondary/Monitoring Applet, said eUICC being configured for:
- As soon as said second modem (16) loses coverage with a NPN, sending from said Private Network Secondary/Monitoring Applet (22) to said Private Network Main Applet (21), through an interface (20) between said applets (21, 22), a message indicating that said NPN is no longer available, in order to connect said terminal (10) through said first modem (15) to a public network;
- As soon as said second modem (16) regains coverage with said NPN, sending from said Private Network Secondary/Monitoring Applet (22) to said Private Network Main Applet (21), through said interface (20), a message indicating that said NPN is available, in order to connect said terminal (10) through said first modem (15) to said NPN.
